# EUROPÄISCHE PATENTSCHRIFT

(11) **EP 0 636 303 B1**
(45) Veröffentlichungstag und Bekanntmachung des Hinweises auf die Patenterteilung: **30.10.1996**
(21) Anmeldenummer: 93908893.6
(22) Anmeldetag: 02.04.1993
(51) Int. Cl.: H04Q 1/14

(54) **BAUEINHEIT FÜR EIN VERTEILERGESTELL IN EINEM TELEKOMMUNIKATIONSNETZ**
ASSEMBLY FOR A DISTRIBUTOR RACK IN A TELECOMMUNICATIONS NETWORK
MODULE POUR REPARTITEUR DE RESEAU DE TELECOMMUNICATION

(30) Priorität: 16.04.1992 EP 92106676
(43) Veröffentlichungstag der Anmeldung: 01.02.1995
(73) Patentinhaber: SIEMENS AKTIENGESELLSCHAFT, 80333 München (DE)
(72) Erfinder: STEINER, Ewald, D-8137 Berg 3 (DE)
(86) Internationale Anmeldenummer: EP9300820
(87) Internationale Veröffentlichungsnummer: WO9321738

(56) Entgegenhaltungen:
- DE-A- 2 740 963
- US-A- 4 563 053
- PATENT ABSTRACTS OF JAPAN vol. 7, no. 194 (E-195)24. August 1983 & JP-A-58094293

## Beschreibung

Die Erfindung bezieht sich auf eine Baueinheit für ein Verteilergestell in einem Telekommunikationsnetz insbesondere in einer Fernsprechvermittlungsanlage.

Eine derartige Baueinheit ist z.B. durch die W0 91/15086 bekannt geworden. Danach weist die Baueinheit ein stangenförmiges Trägerteil auf, an dem Kontaktbauteile mit Anschlußelementen für elektrische Leitungen übereinandergereiht angeordnet sind. Die Baueinheit weist in einem unteren Abschnitt die Kontaktbauteile für die Außenleitungen auf. Im darüberliegenden Abschnitt der Baueinheit sind die Kontaktbauteile zum Anschluß der Innenleitungen angeordnet.

Beim Neubau oder bei der Erweiterung einer Vermittlungsanlage wird die Kapazität der Vermittlungseinrichtungen nicht dem maximal möglichen Endstand an Teilnehmern, sondern dem Bedarf einiger Folgejahre angepaßt. Dadurch wird der Aufwand an ungenutzten Kapazitäten bei den Vermittlungseinrichtungen gering gehalten. Um das nachträgliche Verlegen von die Außenleitungen aufnehmenden Kabeln zu vermeiden, wird deren Kapazität bereits in der ersten Ausbaustufe dem möglichen Endstand der Teilnehmerzahl angepaßt.

Die Außenleitungen wie auch die Innenleitungen sind in Kabeln zusammengefaßt an die Kontaktbauteile herangeführt. Die Leitungen eines Kabels werden in der Reihenfolge ihrer Anordnung im Kabel mit den Anschlußelementen der Kontaktbauteile verbunden.

Die Anzahl der Innenleitungen entspricht der Anzahl der in den Vermittlungseinrichtungen vorhandenen Teilnehmeranschlüsse. Die Rangierleitungen verbinden die Innenleitungen mit den mit Teilnehmern zu belegenden Außenleitungen. Ihre Anzahl ist damit gleich der Anzahl der angeschlossenen Innenleitungen.

Die vorgefertigte Baueinheit wird mit den Rangierleitungen für die erste Ausbaustufe geliefert. Dabei entspricht das Mengenverhältnis der Kontaktbauteile dem Verhältnis der anzuschließenden Außenleitungen zu den Innenleitungen und kann z.B. zwischen 1 : 1 bis zu 5 : 1 variieren.

Bei den bekannten Baueinheiten sind die Kontaktbauteile für die Innenleitungen und die Kontaktbauteile für die Außenleitungen mittels Rangierleitungen verbunden, die vor dem Einbau der Baueinheit in das Verteilergestell verlegt sind. Die Rangierleitungen sind so geführt und angeschlossen, daß sie nach dem Einbau in das Verteilergestell änderbar und durch Zusatzdrähte ergänzbar sind. Die Baueinheiten werden mit der Rangierverdrahtung jeweils für einen bestimmten Verteiler hergestellt. Dabei ist es bereits bei der Aufteilung der Kontaktbauteile für die Innen- und Außenleitungen und bei der Verlegung der Rangierleitungen erforderlich, die genauen Belegungspläne für den jeweiligen Verteiler zu kennen. Dies führt zu einem beträchtlichen Zeitverzug beim Aufbau des Verteilers, da die Herstellung der Baueinheit erst nach dem Vorliegen der genauen Belegungspläne begonnen werden kann. Da jede Baueinheit individuell hergestellt wird, muß bei der Verlegung der Rangierdrähte genau auf die richtige Lagezuordnung der anzuschließenden Enden der Rangierdrähte geachtet werden, was die Verlegung entsprechend verzögert und verteuert. Durch nachträgliche Änderungen in den Belegungsplänen wird die Abwicklung des Auftrags noch weiter verzögert.

Der Erfindung liegt die Aufgabe zugrunde, die Baueinheit so auszubilden, daß sie einfacher und kostengünstiger hergestellt werden kann und daß das Verteilergestell kurzfristig mit den Baueinheiten versehen werden kann.

Diese Aufgabe wird durch die Erfindung gemäß Anspruch 1 gelöst. Die Baueinheiten werden z.B. in einem Mengenverhältnis von 1:1 bis 5:1 in ganzzahligen Abstufungen hergestellt. Es ist aber auch möglich, nicht ganzzahlige Zwischenstufen von z.B. 2,5 : 1 zu verwirklichen. Jede dieser Abstufungen definiert einen Typ von Baueinheiten mit gleichbleibend verlegter Rangierverdrahtung, bei der die Anschlüsse für die Innenleitungen stets mit den gleichen Anschlüssen für die Außenleitungen verbunden sind. Bei gleichartigen Kontaktbauteilen für die Innen- und Außenleitungen entspricht die Anzahl der Einbauplätze für die Kontaktbauteile ebenfalls dem Mengenverhältnis. Die typisierten Baueinheiten mit gleichbleibender Rangierverdrahtung können erheblich kostengünstiger hergestellt und z.B. automatisiert geprüft werden, da nach Abschluß einer Lernphase die Verlegearbeiten ohne Zuhilfenahme eines Verlegeplanes durchgeführt werden können. Die standardisierten Typen können unabhängig vom jeweiligen Verteiler hergestellt und in diesen kurzfristig eingebaut werden, was die Zeitspanne von der Bestellung der Baueinheiten bis zur Fertigstellung des Verteilers erheblich verkürzt.

Ein wesentlicher Vorteil besteht darin, daß stets die gleichen Außenleitungen eines Teilnehmerkabels mit den gleichen Innenleitungen des Systemkabels verbunden sind. Das Montagepersonal, das die Teilnehmer an die vorhandenen Kabel anschließt, braucht dann nur jeweils zu wissen, an welchen Typ von Baueinheit das Kabel im Verteiler angeschlossen ist, um die Teilnehmer mit den zugehörigen Innenleitungen zu verbinden. Ein spezieller Verlegeplan ist dabei nicht erforderlich. Auf diese Weise wird der gesamte Anschlußaufwand erheblich verringert.

Es ist allerdings möglich, daß einzelne Leitungsbündel des Teilnehmerkabels mit einer höheren Anzahl von Teilnehmern belegt werden müssen. In diesem Fall kann die Rangierverdrahtung entsprechend geändert und ergänzt werden. Diese Änderungsarbeiten betreffen jedoch in aller Regel nur einen geringen Teil der Rangierverdrahtung, so daß der Kostenvorteil der beim Hersteller standardisiert angebrachten Rangierverdrahtung weitgehend erhalten bleibt.

Es ist zweckmäßig, insbesondere neben Baueinheiten mit einer hohen Anzahl von Außenleitungen Leerplätze für Baueinheiten vorzusehen, die ausschließlich mit Kontaktbauteilen für Innenleitungen bestückt sind bzw. ein reziprokes Mengenverhältnis mit einem erhöhten Anteil an Kontaktbauteilen für die Innenleitungen aufweisen. Die in späteren Ausbaustufen hinzukommenden Rangierleitungen werden dann zu den entsprechenden Kontaktbauteilen dieser Baueinheit verlegt.

Am Verteiler können in Anpassung an die jeweiligen Verhältnisse Baueinheiten mit unterschiedlichem Mengenverhältnis angebracht werden. Dabei ist es möglich, an der Baueinheit Einbauplätze frei zu lassen, in die in einer späteren Ausbaustufe zusätzliche Kontaktbauteile für die Innenleitungen eingesetzt werden. Dann können die zusätzlichen Rangierleitungen vorteilhaft innerhalb der Baueinheit verlegt werden.

Durch den definierten Zählabstand ist es möglich, die Rangierleitungen ohne jeden Verlegeplan zwischen den Anschlüssen für die Innen- und Außenleitungen zu verlegen.

Aber auch das im Außendienst tätige Montagepersonal, das diese Rechenregel kennt, kann auf den Verlegeplan verzichten, da die Leitungen des Kabels in stets gleichbleibender Weise an die Kontaktbauteile für die Außenleitungen angeschlossen sind.

Dabei ist es vorteilhaft, an den Kontaktbauteilen für die Außenleitungen stets die Anschlüsse zu wählen, die durch das ganzzahlige Vielfache teilbar sind. Das bedeutet, daß z.B. bei einem Mengenverhältnis von 3 : 1 die Anschlüsse 1, 2, 3 usw. der Kontaktbauteile für die Innenleitungen mit den Anschlüssen 3, 6, 9 usw. der Kontaktbauteile für die Außenleitungen verbunden werden. Diese sind wiederum mit den Leitungen 3, 6, 9 usw. des Teilnehmerkabels verbunden. In der ersten Ausbaustufe werden die Teilnehmer vorzugsweise an diese ausgewählten Leitungen angeschlossen, denen das Montagepersonal ohne.weiteres die entsprechenden Innenleitungen zuordnen kann.

Durch die Weiterbildung nach Anspruch 2 können bei den Baueinheiten in einfacher Weise vom ganzzahligen Mengenverhältnis abweichende Zwischenstufen gebildet werden, ohne daß in den einzelnen Teilbereichen auf den Vorteil der einfachen Zählweise verzichtet werden muß.

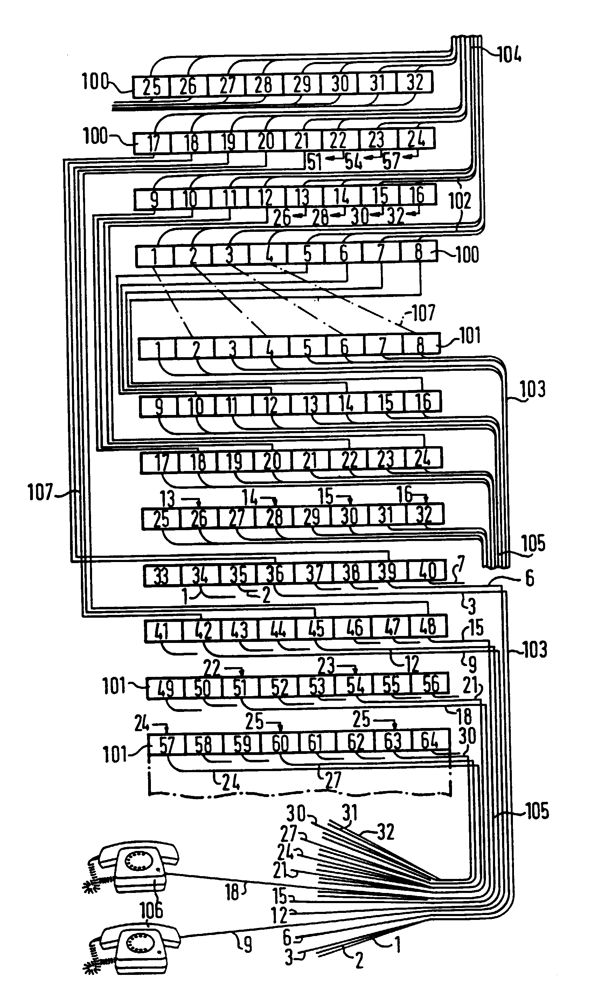

Im folgenden wird die Erfindung anhand eines in der Zeichnung dargestellten Ausführungsbeispiel näher erläutert:

Die dargestellte Figur zeigt schematisiert einen Teil einer modularen Baueinheit zum Einbau in einem Verteilergestell. Die Baueinheit weist schichtweise aneinandergereihte Kontaktbauteile 100, 101 auf, die an einem nicht dargestellten Trägerteil gehalten sind. Die Baueinheit ist in zwei verschiedene Bereiche unterteilt an die zum einen Innenleitungen 102 eines Sytemkabels 104 und zum anderen Außenleitungen 103 von Teilnehmerkabeln 105 herangeführt sind. Das Systemkabel 104 ist mit nicht dargestellten Vermittlungseinrichtung des Vermittlungsamtes verbunden und an die Anschlüsse 1 bis 21 der Kontaktbauteile 100 angeschlossen.

Die Außenleitungen 103 der Teilnehmerkabel 105 sind amtsseitig an die Anschlüsse 1 bis 64 der Kontaktbauteile 101 angeschlossen. Die Teilnehmerkabel 105 führen z.B. in Wohnbezirke von unterschiedlichem Sättigungsgrad an in einer ersten Ausbaustufe anzuschließenden Teilnehmern. Bei einem hohen Sättigungsgrad ist der später zu erwartende Zusatzbedarf an Außenleitungen gering, so daß ein großer Anteil der Außenleitungen 103 des entsprechenden Teilnehmerkabels 105 an Endgeräte 106 angeschlossen werden kann. Bei einem niedrigen Sättigungsgrad bleibt eine größere Anzahl von Außenleitungen des jeweiligen Teilnehmerkabels 105 unbelegt. Da für diese noch keine Verbindungseinrichtungen vorhanden sind, werden lediglich die in der ersten Ausbaustufe zur Belegung bestimmten Leitungen über Rangierleitungen 107 mit den Innenleitungen 102 verbunden. Die durch Verbindung zwischen den Innenleitungen 102 und den Rangierleitungen 107 bzw. den Rangierleitungen 107 und den Außenleitungen 103 erfolgt über Anschlüsse der Kontaktbauteile, denen fortlaufende Zählnummern 1 bis 32 der Kontaktbauteile 100 für die Innenleitungen bzw. 1 bis 64 der Kontaktbauteile 101 für die Außenleitungen zugeordnet sind.

Die Rangierleitungen 107 sind lückenlos der Reihe nach an die Anschlüsse 1 bis 32 der Kontaktbauteile 100 für die Innenleitungen 102 angeschlossen. Sie sind zu den Anschlüssen 1 bis 64 Kontaktbauteile 101 für die Außenleitungen 103 verlegt und jeweils an jeden zweiten bzw. dritten Anschluß in aufsteigender Reihenfolge angeschlossen. Die Außenleitungen 103 sind an die Anschlüsse 1 bis 64 der Kontaktbauteile 101 lückenlos angeschlossen. Auf diese Weise werden z.B. die Leitungen 3, 6, 12 eines der Teilnehmerkabel 105 mit den Anschlüssen 36, 39, 42 der Kontaktbauteile 101 verbunden. Diese sind über die entsprechenden Rangierleitungen mit den Anschlüssen 17, 18, 19 der Kontaktbauteile 100 für die Innenleitungen 102 verknüpft.

## Patentansprüche

1. Baueinheiten zum Einbau in Verteilergestelle von Kommunikationsnetzen, insbesondere in Fernsprechvermittlungsanlagen, wobei jeweils eine der modularen Baueinheiten ein Trägerteil aufweist, an dem Kontaktbauteile (101) mit Anschlüssen von zu Teilnehmern führenden Außenleitungen (103) und Kontaktbauteile (100) mit Anschlüssen von zu Vermittlungseinrichtungen führenden Innenleitungen (102) gehalten sind, wobei die Kontaktbauteile (101) für die Außenleitungen (103) und die Kontaktbauteile (100) für die Innenleitungen (102) jeweils in räumlich voneinander abgegrenzten Bereichen der Baueinheit zusammengefaßt sind, wobei die Anzahl der Anschlüsse für die Außenleitungen (103) zur Anzahl der Anschlüsse für die Innenleitungen (102) ein Mengenverhältnis größer als 1 definiert, wobei die Kontaktbauteile (100) für die Innenleitungen (102) und die Kontaktbauteile (101) für die Außenleitungen (103) mittels Rangierleitungen (107) verbunden sind, die vor dem Einbau der Baueinheit verlegt und angeschlossen sind, wobei die Rangierleitungen (107) nach dem Einbau in das Verteilergestell änderbar und ergänzbar sind,
**dadurch gekennzeichnet**,
daß das Mengenverhältnis gleich einem ganz- oder halbzahligen Vielfachen ist, daß bei allen Baueinheiten mit gleichem Mengenverhältnis die Rangierleitungen (107) nach einem jeweils einheitlichen Verdrahtungsplan an die Kontaktbauteile (100), (101) für die Innen- und Außenleitungen (102, 103) angeschlossen sind, daß die Baueinheiten mit den Anschlußelementen der Kontaktbauteile (100, 101) zugeordneten Zählnummern beschriftet sind, daß die Rangierleitungen (107) an die Anschlüsse für die Innenleitungen (102) der Reihe nach lückenlos angeschlossen sind und die anderen Enden der Rangierleitungen (107) an die Anschlüsse für die Außenleitungen (103) in der gleichen Reihenfolge wie bei den Innenleitungen und in gleichbleibendem Zählabstand angeschlossen sind, der gleich dem Mengenverhältnis ist, wobei zwischen den von den Rangierleitungen (107) belegten Anschlüssen für die Außenleitungen (103) eine jeweils gleichbleibende Anzahl von Reserveanschlüssen freibleibt, und daß die Baueinheiten mit verschiedenen Mengenverhältnissen jeweils gleiche Montageanschlüsse zum Einbau in die Verteilergestelle aufweisen.

2. Baueinheiten nach Anspruch 1,
**dadurch gekennzeichnet,**
daß innerhalb des Bereiches der Kontaktbauteile (101) für die Außenleitungen (103) verschiedene Unterbereiche gebildet sind, in denen die Rangierleitungen (107) in jeweils unterschiedlichem ganzzahligen Zählabstand an die Kontaktbauteile (101) angeschlossen sind.

## Claims

1. Assemblies for installation in distributor racks of communications networks, preferably in telephone exchanges, in each case one of the modular assemblies having a carrier part on which there are held contact units (101) with connections of external lines (103), leading to subscribers, and contact units (100) with connections of internal lines (102), leading to switching devices, the contact units (101) for the external lines (103) and the contact units (100) for the internal lines (102) in each case being combined in regions of the assembly which are spatially delimited from one another, the number of connections for the external lines (103) with respect to the number of connections for the internal lines (102) defining a quantitative ratio greater than 1, the contact units (100) for the internal lines (102) and the contact units (101) for the external lines (103) being connected by means of jumpering lines (107), which are laid and connected before installation of the assembly, it being possible for the jumpering lines (107) to be altered and added to after installation into the distributor rack, characterized in that the quantitative ratio is equal to an integral or half-integral multiple, in that for all the assemblies with the same quantitative ratio the jumpering lines (107) are connected in accordance with a respectively standard wiring plan to the contact units (100, 101) for the internal and external lines (102, 103), in that the assemblies are inscribed with counting numbers assigned to the connection elements of the contact units (100, 101), in that the jumpering lines (107) are connected uninterruptedly in series to the connections for the internal lines (102) and the other ends of the jumpering lines (107) are connected to the connections for the external lines (103) in the same sequence as in the case of the internal lines and in a counting interval which remains the same and is equal to the quantitative ratio, there remaining free between the connections for the external lines (103) which are occupied by the jumpering lines (107) a number of reserve connections which remains the same in each case, and in that the assemblies with varying quantitative ratios in each case have the same installation connections for installation into the distributor racks.

2. Assemblies according to Claim 1, characterized in that within the region of the contact units (101) for the external lines (103) there are formed various subregions, in which the jumpering lines (107) are connected to the contact units (101) in a respectively varying integral counting interval.

## Revendications

1. Modules destinés à être montés dans des bâtis de répartiteur de réseau de communication, notamment dans des installations de commutation téléphonique, chacune des unités modulaires comportant une pièce de support sur laquelle sont maintenues des composants (101) de contact comportant des points de raccordement de lignes (103) extérieures allant à des abonnés et des composants (100) de contact comportant des points de raccordement de lignes (102) intérieures allant à des installations de commutation, les composants (101) de contact destinés aux lignes (103) extérieures et les composants (100) de contact destinés aux lignes (102) intérieures étant rassemblés respectivement dans des zones du module délimitées dans l'espaces les unes par rapport aux autres, le nombre des points de raccordement destinés aux lignes (103) extérieures définissant par rapport au nombre des points de raccordement destinés aux lignes (102) intérieures un rapport quantitatif supérieur à 1, les composants (100) de contact destinés aux lignes (102) intérieures et les composants (101) destinés aux lignes (103) extérieures étant reliés au moyen de lignes (107) de connexion qui sont posées et raccordées avant le montage du module, les lignes (107) de connexion pouvant être modifiées et complétées après le montage du module dans le bâti de répartiteur, caractérisé en ce que le rapport quantitatif est égal à un multiple entier ou à un multiple semi-entier, en ce que, dans tous les modules ayant un même rapport quantitatif, les lignes (107) de connexion sont raccordées, chacune suivant un plan unitaire de câblage, aux composants (100), (101) de contact destinés aux lignes intérieures et extérieures (102, 103), en ce que les modules sont marqués de numéros de comptage associés aux éléments de raccordement des composants (100, 101) de contact, en ce que les lignes (107) de connexion sont raccordées successivement, sans discontinuité, aux points de raccordement destinés au lignes (102) intérieures et les autres extrémités des lignes (107) de connexion raccordées aux points de raccordement destinés aux lignes (103) extérieures dans la même succession que pour les lignes intérieures et à un intervalle numérique identique qui est égal au rapport quantitatif, un nombre identique de points de raccordement de réserve restant libre, pour les lignes (103) extérieures, entre les points de raccordement occupés par les lignes (107) de connexion, et en ce que les modules ayant des rapports quantitatifs différents comportent de mêmes points de raccordement de montage pour l'insertion dans le bâti de répartiteur.

2. Modules suivant la revendication 1, caractérisé en ce qu'il est formé, à l'intérieur de la zone des composants (101) de contact destinés aux lignes (103) extérieures, diverses sous-zones dans lesquelles les lignes (107) de connexion sont raccordées aux composants (101) de contact, à un intervalle numérique entier différent.
